# FASCICULE DE BREVET EUROPEEN

(11) **EP 4 423 377 B1**
(45) Date de publication et mention de la délivrance du brevet: **02.07.2025**
(21) Numéro de dépôt: 22801858.6
(22) Date de dépôt: 18.10.2022
(51) Int. Cl.: F02C 7/06, F02C 7/14, F02C 7/224

(54) **DÉTECTION DE PRÉSENCE DE CARBURANT DANS L'HUILE D'UN MOTEUR D'AVION**
ERKENNUNG DER ANWESENHEIT VON KRAFTSTOFF IM ÖL EINES FLUGZEUGMOTORS
DETECTION OF THE PRESENCE OF FUEL IN THE OIL OF AN AIRCRAFT ENGINE

(30) Priorité: 29.10.2021 FR 2111562
(43) Date de publication de la demande: 04.09.2024
(73) Titulaire: SAFRAN AIRCRAFT ENGINES, 75015 Paris (FR)
(72) Inventeur: BOURGET, Sébastien, 77550 MOISSY-CRAMAYEL (FR); FONTANEL, Eddy, Stéphane, Joël, 77550 MOISSY-CRAMAYEL (FR); GAMEIRO, Sébastien, 77550 MOISSY-CRAMAYEL (FR); GAUTHIER, Gerard Philippe, 77550 MOISSY-CRAMAYEL (FR)
(74) Mandataire: Brevalex
(86) Numéro de dépôt international: PCT/FR2022/051962
(87) Numéro de publication internationale: WO 2023/073302

(56) Documents cités:
- DE-A1- 19 949 096
- FR-A1- 3 095 836
- FR-B1- 3 036 792
- SNOW, DENNIS A.: "Plant Engineer's Reference Book, Second edition", 31 December 2002, BUTTERWORTH-HEINERMANN, ISBN: 0750644524, XP040425915

## Description

La présente demande traite de la détection de présence de carburant dans l'huile d'un moteur d'avion.

Des échanges thermiques entre de l'huile et du carburant sont utilisés dans certains moteurs d'avion, où l'huile est transportée en boucle dans un circuit fermé de lubrification et soumise à des échauffements importants, pour la refroidir par le carburant plus frais qui parcourt un circuit d'alimentation du moteur. Les circuits d'huile et de carburant passent tous deux par un échangeur de chaleur tout en restant distincts. Des avaries de l'échangeur peuvent toutefois mettre les circuits en communication, avec une fuite vers le circuit à plus basse pression et un mélange des fluides, ce qui est préjudiciable. Si le carburant est à plus haute pression et qu'une partie de son débit s'écoule donc dans les circuits d'huile, la lubrification peut être altérée. En cas de fuite trop importante, le mélange huile-carburant peut déborder des enceintes du circuit de lubrification et migrer vers des zones chaudes du moteur où l'auto-ignition du mélange huile-carburant ne peut être exclue, situation qui doit être évitée.

On pourra se reporter aux documents suivants pour avoir une connaissance plus approfondie de circuits d'huile dans des moteurs d'aéronef et notamment de circuits de lubrification dynamique de roulements, ces circuits étant dotés éventuellement de réservoirs de stockage d'huile munis de jauges de niveau de liquide dans le réservoir :
FR 3 068 102 A1 et FR 3 074 848 A1 illustrent des dispositifs d'évacuation de trop-plein dans des réservoirs d'huile, afin de pallier les conséquences de fuites du carburant vers l'huile ;
EP 3 707 350 A1 illustre un circuit d'alimentation en huile dont un réservoir est doté d'une jauge de niveau d'huile, à flotteur magnétique ;
EP 3 304 010 A1, une autre jauge à flotteur magnétique dans un réservoir d'huile ;
WO 2020/201651 A1, un procédé de remplissage d'un réservoir d'huile, en exploitant de façon optimale les indications d'une jauge dans le réservoir ;
FR 3 074 848 A1, un exemple complet de circuit de lubrification dynamique;
FR 3 095 836 A1, un séparateur de fluide d'un mélange diphasique pouvant circuler dans un circuit fluidique de moteur d'aéronef, notamment pour trop-plein dans un circuit de lubrification.

Un procédé actuellement appliqué aujourd'hui pour détecter la présence de carburant dans l'huile consiste en des vérifications à l'odeur, accomplies par un opérateur entre deux vols de l'avion. Ce procédé est évidemment imprécis, exposé à des défaillances humaines, praticable seulement pendant l'entretien du moteur et relativement long à accomplir. On voudrait donc pouvoir appliquer un procédé plus fiable, commode et précis, qui permettrait aussi de diagnostiquer en temps réel des fuites qui apparaîtraient pendant un vol et imposeraient une réaction sans délai.

Sous une forme générale, l'invention concerne un moteur d'aéronef ayant un circuit d'alimentation en un carburant et un circuit de lubrification parcouru par une huile, le circuit de lubrification comprenant un réservoir muni d'au moins une jauge de mesure de niveau de liquide dans le réservoir, un échangeur de chaleur où le circuit d'alimentation et le circuit de lubrification sont accolés l'un à l'autre, et la jauge comprenant un flotteur dans le réservoir, caractérisé en ce que le flotteur a une masse volumique supérieure à un mélange composé, en volumes, de X% du carburant et de (100 - X)% de l'huile ; X est compris entre 5 et 35.

Comme le carburant a généralement une densité inférieure à celle de l'huile, toute fuite de celui-là dans celle-ci se traduit par une réduction de la densité du mélange formé, et une réduction de la flottabilité et donc de l'émergence du flotteur. Si le mélange devient moins dense que le flotteur, celui-ci s'enfonce et permet de détecter la fuite. Et comme la densité du flotteur est facilement ajustable, la teneur en carburant du mélange formé au-delà de laquelle une détection est faite est déterminée par le concepteur du dispositif.

En pratique, on peut préconiser avantageusement que X = 20, ou que la masse volumique du flotteur soit comprise entre 80% et 95% de la masse volumique de l'huile.

D'après certaines constructions avantageuses, le flotteur est un flotteur magnétique comprenant un aimant permanent ; il comprend une enveloppe composée de moitiés assemblées et contenant un volume creux, dans lequel l'aimant permanent est fixé à une des moitiés à une position excentrée d'un centre géométrique de l'enveloppe ; le volume creux comprend un lest posé sur une surface de fond du volume creux ; le lest est composé d'une pluralité d'unités de lest déposées dans le volume creux.

Un autre aspect de l'invention est un procédé de détection d'une fuite de carburant dans un circuit de lubrification d'un moteur d'aéronef, le circuit de lubrification comprenant un réservoir d'huile contenant au moins une jauge de mesure de niveau de liquide, la jauge comprenant un flotteur, et un échangeur de chaleur avec un circuit de transport d'un carburant du moteur, le flotteur ayant une masse volumique inférieure à une masse volumique d'une huile circulant dans le circuit de lubrification et supérieure à une masse volumique du carburant, caractérisé en ce que la fuite de carburant est détectée pour un état de descente du flotteur à un niveau inférieur de la jauge, simultané à une pression de fonctionnement considérée comme normale dans le réservoir.

L'invention sera maintenant décrite en détail au moyen des figures suivantes qui en illustrent des réalisations particulières données à titre purement illustratif :
- la Figure 1 représente schématiquement un circuit de lubrification à l'huile ;
- la Figure 2, le principe sur lequel l'invention est fondée ;
- la Figure 3, une réalisation de flotteur magnétique ;
- la Figure 4, une variante de réalisation du flotteur ; et
- la Figure 5, le procédé employé.

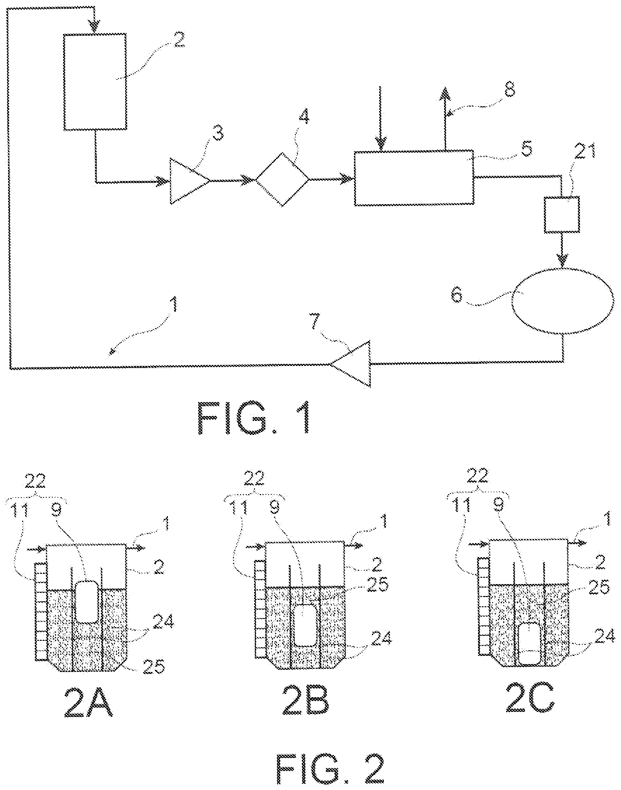

Un circuit de lubrification 1 à l'huile d'un moteur d'aéronef (ce moteur étant par ailleurs connu, et donc non représenté en entier) est d'abord schématisé à la figure 1. Il comprend un conduit 1 en boucle fermée, passant successivement (d'après le sens de circulation de l'huile) par un réservoir 2 de stockage d'huile, une première pompe 3, un filtre 4, un échangeur de chaleur 5, une enceinte 6 à lubrifier du moteur, et une seconde pompe 7. L'enceinte 6 peut contenir en pratique un ou plusieurs roulements à lubrifier. Elle peut être fermée, communiquer à l'extérieur seulement par des joints d'étanchéité à débit de fuite très faible, ou communiquer à d'autres enceintes en surpression et à atmosphère sèche, si bien que le circuit entier peut être considéré comme fermé : la quantité d'huile qu'il contient devrait rester constante ou quasiment.

L'échangeur de chaleur 5 est destiné à refroidir l'huile, et un circuit d'alimentation 8 en carburant sous pression, destiné à alimenter le moteur et encore froid, le traverse. Si une paroi de l'échangeur de chaleur 5 qui sépare les deux circuits (l'échangeur peut comprendre un groupe de tubes parallèles dans chacun desquels un débit du carburant s'écoule, ou consister en un échangeur à plaques) est percée, du carburant peut fuir dans le circuit de lubrification 1 et s'y accumuler plus ou moins rapidement, augmentant ainsi le volume de fluide dans le circuit d'huile. Le fluide constitué d'un mélange d'huile et de carburant risque alors de fuir hors de l'enceinte et d'atteindre des parties très chaudes du moteur avec un risque d'auto-inflammation du mélange, ce qui doit absolument être évité.

La figure 2, composée de trois parties 2A, 2B et 2C illustrant des phases successives de l'état du réservoir 2 en cas de fuite, montre que le réservoir 2 contient un flotteur 9, dont la masse volumique ou la densité est donc inférieure à celle de l'huile. Le niveau d'huile est corrélé à la hauteur du flotteur 9 dans le réservoir 2. Une jauge de mesure de niveau 22 comprend, outre le flotteur 9, une échelle de graduations 11 en relation de mesure avec le flotteur 9 et qui permet donc de mesurer sa hauteur. Dans le cas fréquent et principalement considéré ici où le flotteur 9 est un flotteur magnétique, l'échelle de graduations 11 peut prendre la forme d'une succession de circuits électriques soumis sélectivement à l'induction magnétique du flotteur 9, comme il est détaillé dans un document (EP 3 707 350 A1) susmentionné. La jauge de mesure de niveau 22 sert classiquement à suivre les variations de hauteur de la phase liquide présente dans le réservoir 2 et d'alerter en cas de vidange ou au contraire de trop-plein de celui-ci.

Dans des réalisations préférées de l'invention, le flotteur 9 aura un petit volume émergé, comme celui qui est représenté à la partie 2A, et qui sera couramment entre 5% et 20% du volume du flotteur.

Si maintenant du carburant du circuit d'alimentation 8 fuit dans le circuit de lubrification 1, la composition de la phase liquide présente dans le réservoir 2 se modifie et sa masse volumique diminue, puisque le carburant pour les moteurs d'avions est moins dense que les huiles couramment utilisées. L'émergence du flotteur 9 diminue (selon la partie 2B de la figure 2) ; et, si la densité du flotteur 9 a été judicieusement choisie, elle devient supérieure à celle du mélange dès que le carburant atteint une teneur déterminée dans l'huile, ce qui implique que le flotteur coule au fond du réservoir 2 (selon la partie 2C de la figure 2). On considère en effet qu'en fonctionnement, le débit des pompes à huiles telles que les pompes 3 et 7 est important, et que l'huile dans le réservoir 2 est renouvelée rapidement par circulation en circuit fermé. De manière typique, le temps de séjour moyen de l'huile dans un réservoir d'huile d'un moteur d'aéronef est inférieur à 20 secondes, et généralement inférieur à 10 secondes. Le carburant arrivant dans le réservoir 2 et mélangé à l'huile n'a donc pas le temps de se décanter significativement avant d'être aspiré vers la sortie du réservoir 2. On considère donc que la densité du mélange huile-carburant reste relativement homogène dans tout le réservoir 2, et que le flotteur 9 coule rapidement jusqu'au fond du réservoir 2 (ou de la course verticale offerte au flotteur 9) quand la teneur en carburant a atteint la limite d'émergence. De plus, le flotteur reste à cette position inférieure sans changement par la suite, quelles que soient les variations de hauteur du liquide dans le réservoir 2. Au lieu de fournir la position de la hauteur du liquide, le flotteur 9 indique donc une position inférieure qui est utilisée alors pour diagnostiquer la fuite du carburant. La masse volumique du flotteur 9 est choisie pour donner la détection de fuite quand une teneur de X % de carburant dans l'huile est atteinte. Un seuil de détection de par exemple X = 20 % peut être envisagé; il correspond à des masses volumiques du flotteur 9 comprises entre 80 % et 95 % de celle de l'huile pour des huiles et des carburants courants.

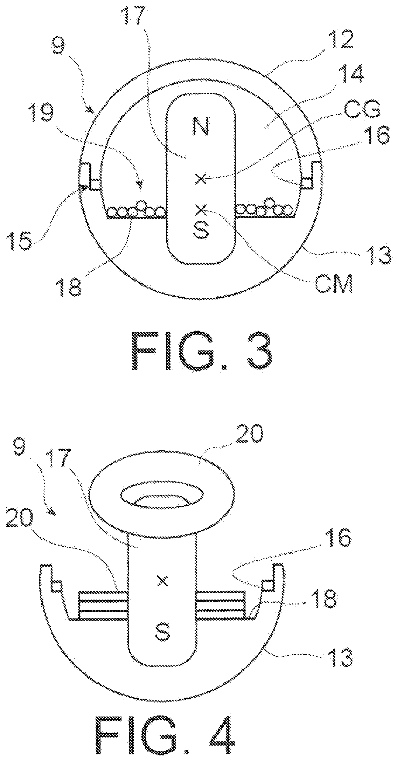

On se reporte à la figure 3. Le flotteur 9 peut être de forme sphérique et comprendre une enveloppe composée de deux moitiés 12 et 13 enfermant complètement un volume creux 14 et réunies à une interface 15 qui peut être vissée et pourvue d'un joint d'étanchéité 16. Un aimant permanent 17 est contenu dans le volume creux 14 en étant partiellement encastré dans une des moitiés 13. Bien que la forme extérieure du flotteur 9 puisse être prévue sphérique comme ici, le flotteur est conçu pour ne pas basculer significativement lors de sa flottaison, c'est-à-dire pour conserver sensiblement une même orientation de l'aimant permanent 17, typiquement une orientation verticale de l'axe de l'aimant. On y parvient si son centre de masse CM est distinct du centre géométrique CG qui correspond aussi au centre de flottaison, car le flotteur 9, même libre, maintient le centre de masse CM au-dessous du centre géométrique CG. Leur distance peut être obtenue soit en excentrant la position de l'aimant permanent 17 soit, ce qu'on a représenté ici, en construisant une des moitiés 13 beaucoup plus massive que l'autre. Ici, la moitié 13 comporte une surface intérieure plane 18 donnant dans le volume creux 14. Des billes 19 de lest peuvent être posées sur cette face intérieure 18, et même laissées libres de se déplacer, puisque le flotteur 9 est supposé rester à une orientation invariable. Les billes 19 déterminent la masse volumique du flotteur 9. Le fabricant du dispositif est libre d'ajuster facilement la densité du flotteur 9, et donc le seuil de détection des fuites de carburant, c'est-à-dire la teneur du carburant dans l'huile qui supprime l'émergence du flotteur 9, en choisissant le nombre des billes 19 ou plus généralement des unités de lest. Un seuil envisageable pour déclencher les détections est une proportion en volume de 20% de carburant dans le mélange. La masse volumique du flotteur 9 peut aussi être ajustée pour tenir compte de variétés différentes d'huile ou de températures différentes dans le circuit de lubrification, comme on détaillera plus loin. Le cas échéant, il sera possible de fabriquer plusieurs flotteurs 9 semblables, de les lester à des valeurs différentes, et de choisir celui qui sera le mieux approprié à un réservoir ou un circuit particulier.

Le même résultat pourrait être obtenu avec d'autres moyens de lestage, comme des rondelles 20, représentées à la figure 4 et enfilées autour de l'aimant permanent 17, qui se présente ici sous forme de tige orientée verticalement et dont le sommet est dégagé dans le volume vide 14.

D'autres variantes de construction, nombreuses, sont possibles. Le lest solide pourrait être remplacé par un lest liquide déposé en gouttelettes, chacune d'elles constituant une unité de lest. De nombreux autres genres de flotteurs, par exemple quant à la forme de leur enveloppe, peuvent aussi être proposés. Le flotteur 9 pourra ainsi être cylindrique, comme on l'a illustré à la figure 2.

Un phénomène perturbateur doit toutefois être discuté. Contrairement à l'huile et au carburant dont les densités évoluent fortement en fonction de la température, celle des flotteurs usuels est peu variable. La limite d'émergence des flotteurs serait donc atteinte à des concentrations en carburant variables en fonction de la température du mélange. Cet inconvénient peut être réduit par l'utilisation d'un matériau à fort coefficient de dilatation thermique pour l'enveloppe extérieure du flotteur 9 (par exemple en PTFE). Le PTFE a en effet un coefficient de dilatation thermique voisin de celui des huiles usuelles. Les variations de densité du flotteur 9 et de l'huile, en fonction de la température, deviennent proches l'une de l'autre et la détection est plus uniforme. Construire au moins l'enveloppe extérieure du flotteur 9 en PTFE a encore l'avantage de lui permettre de glisser facilement dans des règles de guidage 24 vertical usuelles pour le guider en délimitant une colonne de guidage 25 dans le réservoir 2.

Une sonde de pression d'huile 21, représentée à la figure 1 et installée sur le circuit de lubrification 1, par exemple à l'entrée de l'enceinte 6, sert à éviter certains diagnostics incorrects. Si en effet le circuit perd son huile et qu'il n'y a pas de fuite de carburant dans l'huile, le flotteur 9 descend aussi au fond du réservoir 2, mais dans le même temps la valeur de la pression de l'huile diminue fortement et descend sous un seuil d'alerte très inférieur à la pression nominale du circuit. La détection du flotteur en position basse de « réservoir vide » conjuguée à la détection d'une pression d'huile anormalement basse ne déclenchera donc pas une alerte de fuite de carburant dans l'huile, mais une alerte de perte d'huile. Une détection incorrecte de fuite de carburant dans l'huile peut donc être évitée en vérifiant que la pression d'huile dans le circuit de lubrification, de préférence mesurée à l'entrée des enceintes de lubrification, reste à la pression de fonctionnement souhaitée.

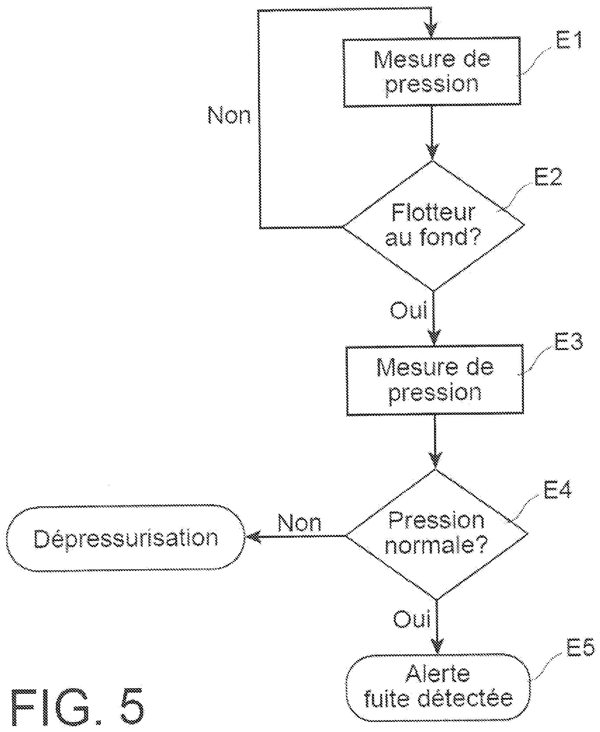

Le procédé conforme à l'invention est décrit schématiquement à la figure 5. La hauteur du flotteur 9 de la jauge de mesure de niveau 22 est mesurée continuellement à l'étape E1. Une détermination est faite alors à l'étape E2. Si le flotteur 9 est au-dessus du fond du réservoir 2, l'algorithme retourne au début du procédé. Si le niveau mesuré par la jauge de mesure de niveau 22 est trop élevé ou trop bas sans être au fond du réservoir 2, un excès ou une insuffisance de remplissage est constaté, mais cela sort de la présente invention. Si le flotteur 9 est au fond du réservoir 2, on recourt à une détermination de mesure de la pression d'huile dans le circuit de lubrification à l'étape E3. Si la pression d'huile est basse, une dépressurisation redevable à une vidange du circuit d'huile est diagnostiquée à l'étape E4. Si la pression reste normale, c'est une fuite de carburant dans l'huile qui est diagnostiquée, et une alerte peut être donnée à l'étape E5.

## Revendications

1. Moteur d'aéronef ayant un circuit d'alimentation (8) en un carburant et un circuit de lubrification (1) parcouru par une huile, le circuit de lubrification comprenant un réservoir (2) muni au moins d'une jauge (22) de mesure de niveau de liquide dans le réservoir (2), un échangeur de chaleur (5) où le circuit d'alimentation et le circuit de lubrification sont accolés l'un à l'autre, et la jauge comprenant un flotteur (9) dans le réservoir (2), **caractérisé en ce que** le flotteur a une masse volumique supérieure à celle d'un mélange composé, en volumes, de X% du carburant et de (100 - X)% de l'huile, où X est compris entre 5 et 35.

2. Moteur selon la revendication 1, **caractérisé en ce que** X = 20.

3. Moteur selon l'une quelconque des revendications 1 ou 2, **caractérisé en ce que** la masse volumique du flotteur (9) est comprise entre 80% et 95% de la masse volumique de l'huile.

4. Moteur selon l'une quelconque des revendications 1 à 3, **caractérisé en ce que** le flotteur est un flotteur magnétique comprenant un aimant permanent (17).

5. Moteur selon la revendication 4, **caractérisé en ce que** le flotteur comprend une enveloppe composée de moitiés (12, 13) assemblées et contenant un volume creux (14), dans lequel l'aimant permanent est fixé à une des moitiés, le flotteur ayant un centre de masses excentré d'un centre géométrique de l'enveloppe.

6. Moteur selon la revendication 5, **caractérisé en ce que** le volume creux comprend un lest (19) posé sur une surface de fond (18) du volume creux (14).

7. Moteur selon la revendication 6, **caractérisé en ce que** le lest est composé d'une pluralité d'unités de lest déposées dans le volume creux.

8. Moteur selon la revendication 3, **caractérisé en ce que** le flotteur a une enveloppe extérieure en PTFE.

9. Procédé de détection d'une fuite de carburant dans un circuit de lubrification (1) d'un moteur d'aéronef, le circuit de lubrification comprenant un réservoir (2) d'huile muni d'au moins une jauge (22) de mesure de niveau de liquide, la jauge comprenant un flotteur (9) dans le réservoir, le circuit de lubrification (1) comprenant un échangeur de chaleur (5) avec un circuit (8) de transport d'un carburant du moteur, le flotteur (9) ayant une masse volumique inférieure à une masse volumique d'une huile circulant dans le circuit de lubrification et supérieure à une masse volumique du carburant, **caractérisé en ce que** la fuite de carburant est détectée pour un état de descente du flotteur jusqu'à un niveau inférieur de la jauge, simultané à une pression de fonctionnement considérée comme normale dans le réservoir.

## Patentansprüche

1. Flugzeugmotor mit einem Kraftstoffversorgungskreislauf (8) und einem Schmierkreislauf (1), der von einem Öl durchflossen wird, wobei der Schmierkreislauf einen Behälter (2), der mindestens mit einer Flüssigkeitsstandsmesslehre (22) im Behälter (2) ausgestattet ist, und einen Wärmetauscher (5) umfasst, bei dem der Versorgungskreislauf und der Schmierkreislauf aneinander angrenzen, und wobei die Messlehre einen Schwimmer (9) im Behälter (2) umfasst, **dadurch gekennzeichnet, dass** der Schwimmer eine höhere Dichte aufweist als ein Gemisch, das aus X % des Kraftstoffs und (100 - X) % des Öls besteht, wobei X zwischen 5 und 35 liegt.

2. Motor nach Anspruch 1, **dadurch gekennzeichnet, dass** X = 20.

3. Motor nach einem der Ansprüche 1 oder 2, **dadurch gekennzeichnet, dass** die Dichte des Schwimmers (9) zwischen 80 % und 95 % der Dichte des Öls liegt.

4. Motor nach einem der Ansprüche 1 bis 3, **dadurch gekennzeichnet, dass** der Schwimmer ein magnetischer Schwimmer ist, der einen Permanentmagneten (17) umfasst.

5. Motor nach Anspruch 4, **dadurch gekennzeichnet, dass** der Schwimmer eine Hülle umfasst, die aus zusammengesetzten Hälften (12, 13) besteht und ein Hohlvolumen (14) enthält, wobei der Permanentmagnet an einer der Hälften befestigt ist, wobei der Schwimmer einen exzentrischen Massenschwerpunkt hat, der von einem geometrischen Mittelpunkt der Hülle exzentrisch ist.

6. Motor nach Anspruch 5, **dadurch gekennzeichnet, dass** das Hohlvolumen einen auf einer Bodenfläche (18) des Hohlvolumens (14) aufliegenden Ballast (19) umfasst.

7. Motor nach Anspruch 6, **dadurch gekennzeichnet, dass** der Ballast aus einer Vielzahl von in das Hohlvolumen eingebrachten Ballasteinheiten besteht.

8. Motor nach Anspruch 3, **dadurch gekennzeichnet, dass** der Schwimmer eine Außenhülle aus PTFE aufweist.

9. Verfahren zum Erkennen eines Kraftstofflecks in einem Schmierkreislauf (1) eines Flugzeugmotors, wobei der Schmierkreislauf einen Ölbehälter (2) mit mindestens einer Flüssigkeitsstandsmesslehre (22) umfasst, wobei die Messlehre einen Schwimmer (9) im Behälter umfasst, wobei der Schmierkreislauf (1) einen Wärmetauscher (5) mit einem Kreislauf (8) zum Transport eines Kraftstoffs des Motors umfasst, wobei der Schwimmer (9) eine Dichte aufweist, die kleiner als die Dichte eines im Schmierkreislauf zirkulierenden Öls und größer als die Dichte des Kraftstoffs ist, **dadurch gekennzeichnet, dass** das Kraftstoffleck für einen Zustand erkannt wird, in dem der Schwimmer bis zu einem niedrigeren Füllstand der Messlehre sinkt, gleichzeitig mit einem als normal angesehenen Betriebsdruck im Behälter.

## Claims

1. An aircraft engine having a fuel supply circuit (8) and a lubrication circuit (1) through which an oil flows, the lubrication circuit comprising a tank (2) provided with at least one gauge (22) for measuring liquid level in the tank (2), a heat exchanger (5) where the supply circuit and the lubrication circuit are side by side, and the gauge comprising a float (9) in the tank (2), **characterised in that** the float has a density greater than that of a mixture comprised, by volume, of X% of the fuel and (100 - X)% of the oil, where X is between 5 and 35.

2. The engine according to claim 1, **characterised in that** X = 20.

3. The engine according to any of claims 1 or 2, **characterised in that** the density of the float (9) is between 80% and 95% of the density of the oil.

4. The engine according to any of claims 1 to 3, **characterised in that** the float is a magnetic float comprising a permanent magnet (17).

5. The engine according to claim 4, **characterised in that** the float comprises a shell comprised of assembled halves (12, 13) and containing a hollow volume (14), wherein the permanent magnet is attached to one of the halves, the float having a centre of masses off-centred from a geometric centre of the shell.

6. The engine according to claim 5, **characterised in that** the hollow volume comprises a ballast (19) placed on a bottom surface (18) of the hollow volume (14).

7. The engine according to claim 6, **characterised in that** the ballast is comprised of a plurality of ballast units deposited into the hollow volume.

8. The engine according to claim 3, **characterised in that** the float has a PTFE outer shell.

9. A method for detecting a fuel leak in a lubrication circuit (1) of an aircraft engine, the lubrication circuit comprising an oil tank (2) provided with at least one liquid level measurement gauge (22), the gauge comprising a float (9) in the tank, the lubrication circuit (1) comprising a heat exchanger (5) with a circuit (8) for transporting a fuel of the engine, the float (9) having a density lower than a density of an oil circulating in the lubrication circuit and greater than a density of the fuel, **characterised in that** the fuel leak is detected for a state of the float going down to a lower level of the gauge, simultaneous with an operating pressure considered to be normal in the tank.
